# EUROPÄISCHE PATENTANMELDUNG

(11) **EP 3 254 892 A1**
(43) Veröffentlichungstag der Anmeldung: **13.12.2017**
(21) Anmeldenummer: 17174331.3
(22) Anmeldetag: 02.06.2017
(51) Int. Cl.: B60P 1/02, B62D 21/20, B62D 53/00, B62D 63/06

(54) **TRAILERZUGANHÄNGER**

(30) Priorität: 06.06.2016 DE 202016102994 U
(71) Anmelder: LR Intralogistik GmbH, 84109 Wörth a. d. Isar (DE)
(72) Erfinder: FISCHER, Herbert, 86830 Schwabmünchen (DE)
(74) Vertreter: Patentship Patentanwaltsgesellschaft mbH

(57) **Zusammenfassung**

Die Erfindung betrifft einen Trailerzuganhänger für einen Routenzug mit einem Tragrahmen (2), der an einem vorderen Fahrwerk (13) und einem hinterem Fahrwerk (13) über eine Hubvorrichtung gegenüber einer Fahrbahnoberfläche anhebbar abgestützt ist, aus einem Längsträger (3) sowie zwei rechtwinklig zu dem Längsträger angeordneten Querträgern (4,5) besteht und mindestens eine Ladeöffnung (6) aufweist, in der parallel zu den Querträgern (4,5) verlaufende Hubzinken (7) zur Aufnahme von in die Ladeöffnung (6) quer zur Fahrtrichtung ein- und ausschiebbare Transportgutwagen angeordnet sind. Der Längsträger des Tragrahmens (2) ist zentral angeordnet und der Tragrahmen (2) in Draufsicht H-förmig ausgebildet, wobei die Ladeöffnungen (6) sich beidseits des Längsträgers (3) befinden.

## Beschreibung

Die Erfindung betrifft einen Trailerzuganhänger für einen Routenzug nach dem Oberbegriff des Patentanspruchs 1.

In der maschinellen Serienfertigung von Produkten, beispielsweise von Automobilen, werden die einzelnen Arbeitsstationen häufig über Trailerzüge mit den erforderlichen Bauteilen versorgt. Diese Trailerzüge bestehen aus einem Zugfahrzeug und einer Mehrzahl von Trailerzuganhängern, auf denen die erforderlichen Bauteile transportiert werden. Im Allgemeinen sind diese Bauteile auf Paletten oder in Gitterboxen untergebracht, so dass die Abmessungen der Trailerzuganhänger auf die Abmessungen der Paletten oder Gitterboxen abgestimmt sind. Vor allem jedoch kommen Trailerzuganhänger zum Einsatz, bei denen die Bauteile oder Paletten auf Transportgutwagen, auch bezeichnet als Trolley, gelagert sind, die im Produktionsbereich auf Rollen verfahren werden können und die als Transportgutwagen von dem Trailerzuganhänger transportiert werden können.

Aus der DE 603 00 189 T2 ist ein Trailerzuganhänger bekannt, der einen C-förmigen Tragrahmen hat, der quer zur Fahrtrichtung an einer Seite eine Ladeöffnung aufweist, in die ein Transportgutwagen eingeschoben werden kann. Dieser wird dabei über eine Mittelschiene des Tragrahmens gefahren, welche das Fahrgestell des Anhängers trägt. In der Transportlage laufen dann, geführt vom Anhängerrahmen, die Transportgutwagen auf eigenen Rollen im Zugverbund mit. Dabei ergibt sich das Problem, dass einzelne Anhänger im Zugverbund zusammen mit den mitgeführten, auf eigenen Rollen laufenden Transportgutwagen aus der Fahrspur ausbrechen können, insbesondere beim Durchfahren enger Kurven, da ein erheblicher Teil der Last über die Rollen des Transportgutwagens abgestützt wird und somit die Radlasten des Trailerzuganhänger vermindert sind.

Aus der EP 2 226 240 B1 ist ein Trailerzuganhänger bekannt, der von oben gesehen einen C-förmigen Tragrahmen aufweist, an dem Hubzinken zur Aufnahme der Transportgutwagen einzeln verstellbar an einem seitlichen Längsträger des Tragrahmens angeordnet sind. Der gesamte Tragrahmen kann über Hubelemente an einem vorderen und hinteren Fahrwerk angehoben werden und dadurch werden eingeschobene Transportgutwagen von den Hubzinken vom Boden abgehoben.

Nachteilig an diesem Stand der Technik ist, dass beim Transport von sehr vielen Transportgutwagen eine große Anzahl von Trailerzuganhängern erforderlich ist bzw. der Transport in einem einzigen Trailerzug nicht möglich ist, da die maximale Anzahl der Trailerzuganhänger in einem Routenzug beschränkt ist.

Der Erfindung liegt die Aufgabe zugrunde, einen Trailerzuganhänger zur Verfügung zu stellen, der eine möglichst hohe Transportkapazität bietet.

Diese Aufgabe wird durch einen Trailerzuganhänger mit den Merkmalen des Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Trailerzuganhänger für einen Routenzug mit einem Tragrahmen, der an einem vorderen Fahrwerk und einem hinterem Fahrwerk über eine Hubvorrichtung gegenüber einer Fahrbahnoberfläche anhebbar abgestützt ist, aus einem Längsträger sowie zwei rechtwinklig zu dem Längsträger angeordneten Querträgern besteht und mindestens eine Ladeöffnung aufweist, in der parallel zu den Querträgern verlaufende Hubzinken zur Aufnahme von in die Ladeöffnung quer zur Fahrtrichtung ein- und ausschiebbare Transportgutwagen angeordnet sind, der Längsträger des Tragrahmens zentral angeordnet ist und der Tragrahmen in Draufsicht H-förmig ausgebildet ist, wobei Ladeöffnungen sich beidseits des Längsträgers befinden.

Bei dieser Lösung ist kein zusätzlicher Rahmen für die Hubzinken oder jeweils eine Hubvorrichtung zu jedem Hubzinken erforderlich, weil nach dem Einfahren eines Transportgutwagens durch die Ladeöffnung auf den Hubzinken der gesamte Tragrahmen relativ zu dem vorderen und hinteren Fahrwerk angehoben wird. Während des Transports im Routenzug sind die Rollen des Transportgutwagens über die Fahrbahn angehoben und der Tragrahmen stützt sich nur über sein vorderes Fahrwerk und sein hinteres Fahrwerk auf der Fahrbahn ab. Vorteilhaft wird es durch den H-Tragrahmen ermöglicht, eine größere Anzahl von Transportgutwagen zu transportieren, in dem auf beiden Seiten Ladeöffnungen mit Hubzinken vorhanden sind. Die Länge eines Routenzuges kann verkürzt werden bzw. bei einem identisch langen Routenzug kann die doppelte Anzahl von Transportgutwagen befördert werden. Auch ist ein Be- und Entladen von Transportgutwagen zu beiden Seiten des Routenzuges möglich.

In Weiterbildung der Erfindung ist vorgesehen, dass die Hubzinken in Fahrtrichtung einzeln in ihrer Position in Bezug auf die Fahrtrichtung bzw. Längserstreckung des Trailerzuganhängers verstellbar an dem Längsträger angebracht sind. Dies wird dadurch ermöglicht, dass die gesamte Ladeöffnung innerhalb des H-förmigen Tragrahmens frei ist. Zahl und Abstand der einzeln manuell verstellbaren Hubzinken können an die Größe und Zahl der jeweils unterzubringenden Transportgutwagen angepasst werden.

Hierbei ist es von Vorteil, wenn die Hubzinken an ihrem dem in die Ladeöffnung ragenden, freien Ende gegenüberliegenden Ende einen vertikalen Arm aufweisen, dessen oberes Ende U-förmig abgewinkelt ist und den oberen Führungsrand des Längsträgers manuell verschiebbar umgreift.

Vorteilhaft haben einer oder mehrere der Hubzinken an ihrem am Längsträger eingehängten Ende einen Auswerferschieber, der über ein Gestänge mit einem vertikal verschiebbaren Haltebolzen am freien Ende des Hubzinkens gekoppelt ist.

Durch diesen Aufbau kann zum einen eine Sicherung des aufgenommenen Transportgutwagens über den Haltebolzen erreicht werden und zum anderen eine leichte Entnahme aus dem Trailerzuganhänger durch den Auswerferschieber, der den Transportgutwagen in Richtung der seitlichen Öffnung verschiebt.

Das vordere Fahrwerk kann aus zwei Vorderradrollen besteht, die jeweils außen an einem vorderen Querträger angeordnet sind.

Anstatt der hier beschriebenen Ausführung eines Fahrwerks mit je einer Vorderradrolle am äußeren Ende des Querträgers des H-förmigen Tragrahmen ist es auch denkbar, zwei Vorderradrollen mit kurzem Abstand in der Mitte anzuordnen, insbesondere als lenkbare Vorderradrollen an einem Drehschemel.

Die Vorderradrollen können lenkbar sein und ihre Lenkbewegungen mechanisch gekoppelt sein, insbesondere durch Spurstangen.

Die Lenkbewegungen der Vorderradrollen können mit einer seitlichen Auslenkung einer Anhängerdeichsel gekoppelt sein.

Durch die Stellung der Lenkdeichsel wird dann der Radeinschlag der gelenkten Vorderradrollen bestimmt.

Das hintere Fahrwerk kann aus zwei Hinterradrollen bestehen, die jeweils außen an einem hinteren Querträger angeordnet sind.

Vorteilhaft sind die Hinterradrollen lenkbar und ihre Lenkbewegungen mechanisch gekoppelt, insbesondere durch Spurstangen.

Durch eine Lenkbarkeit der Hinterachse und insbesondere bei einem im wesentlichen gleichsinnigen und gleichgroßen Lenkeinschlag der Hinterradrollen zu den Vorderradrollen der Vorderachse kann ein besonders guter und spurtreuer Nachlauf eines Trailerzuganhängers zu einem vorauslaufenden Trailerzuganhänger erreicht werden. Es ist auch alternativ denkbar, die Hinterachse als eine Starrachse zu gestalten.

Die Lenkbewegungen der Hinterradrollen können mit einer seitlichen Auslenkung einer um eine vertikale Achse drehbaren Anhängerkupplung gekoppelt sein.

Dadurch kann der Lenkeinschlag der Hinterachse durch die Zugrichtung bzw. die Stellung einer Anhängerdeichsel eines nachlaufenden Anhängers bestimmt werden.

Vorteilhaft ist im Bereich des Längsträgers ein Übertragungsorgan angeordnet, das die Lenkbewegungen der Vorderachsrollen und der Hinteradrolllen koppelt, insbesondere eine Koppelstange.

Dies ermöglicht eine Steuerung des Lenkeinschlags an der Hinterachse abhängig von demjenigen an der Vorderachse. Der Lenkeinschlag der Vorderachse wird dabei im Regelfall durch die Stellung einer Anhängerdeichsel festgelegt.

Weitere Vorteile und Einzelheiten der Erfindung werden anhand der in den schematischen Figuren dargestellten Ausführungsbeispiele näher erläutert. Hierbei zeigt
- Fig. 1: eine perspektivische Ansicht eines erfindungsgemäßen Trailerzuganhängers,
- Fig. 2: den Trailerzuganhänger der Fig. 1 in Aufsicht,
- Fig. 3: den Trailerzuganhänger der Fig. 1 in Seitenansicht,
- Fig. 4: den Trailerzuganhänger der Fig. 1 in Frontansicht,
- Fig. 5: den Trailerzuganhänger der Fig. 1 in Rückansicht,
- Fig. 6: den Trailerzuganhänger der Fig. 1 perspektivisch, schräg von unten und
- Fig. 7: den Trailerzuganhänger der Fig. 1 von unten.

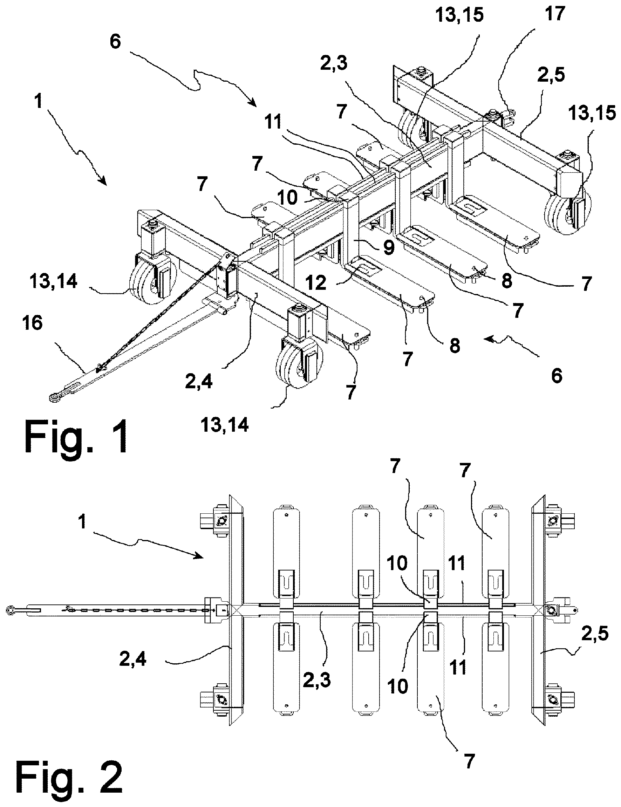

Die Fig. 1 zeigt eine perspektivische Ansicht eines erfindungsgemäßen Trailerzuganhängers 1 mit einem in der Aufsicht H-förmigen Tragrahmen 2, der aus einem in der Mitte angeordneten Längsträger 3 sowie einem vorderen Querträger 4 und einem hinteren Querträger 5 besteht, die an den Enden des Längsträgers 3 angeordnet sind. Rechts und links in Bezug auf die Längsrichtung des Längsträgers 3 ist jeweils eine Ladeöffnung 6, in die parallel zu dem vorderen und hinteren Querträger 4,5 verlaufende Hubzinken 7 ragen, deren seitliche Erstreckung ungefähr so weit reicht, wie diejenige der Querträger 4,5. In dem dargestellten Ausführungsbeispiel sind auf jeder Seite vier Hubzinken 7 vorgesehen. Da diese jedoch unabhängig voneinander sind, können je nach Bedarf auch mehr oder weniger Hubzinken 7 eingesetzt werden.

Wie die Fig. 1 und Fig. 2 erkennen lassen, haben die Hubzinken 7 an ihrem freien Ende nach oben abstehende Haltebolzen 8 zur Sicherung der Ladung bzw. eines hier nicht dargestellten Transportgutwagens.

An dem dem Längsträger 3 zugewandten Ende sind die Hubzinken 7 jeweils an einem vertikalen Arm 9 befestigt, dessen oberes Ende, als U-förmige Abwinkelung 10 ausgebildet ist, die einen oberen Führungsrand 11 des Längsträgers 3 umgreift. Auf diese Weise können die Hubzinken 7 auf dem Längsträger 3 unabhängig voneinander manuell verschoben werden. Ein Auswurfschieber 12 ermöglicht es, einen auf den Hubzinken 7 aufgesetzten Transportgutwagen aus seiner Position herauszuschieben. Dabei wird der Haltebolzen 8 abgesenkt.

Ein Fahrwerk 13 des Trailerzuganhängers 1 ist aus Vorderradrollen 14 an dem vorderen Querträger 4 jeweils außen sowie aus Hinterradrollen 15 an dem hinteren Querträger 5 jeweils außen gebildet. Durch eine nicht näher dargestellte Hubvorrichtung zwischen Tragrahmen 3 und den Vorderradrollen 14 sowie Hinterradrollen 15 kann der Tragrahmen 3 gegenüber der Fahrbahnoberfläche angehoben werden und dadurch mit den Hubzinken 7 den Transportgutwagen anheben und aufnehmen. Der Trailerzuganhänger 1 weist weiterhin noch eine Anhängerdeichsel 16 und eine Anhängerkupplung 17 auf.

Die Fig. 2 zeigt den Trailerzuganhänger 1 der Fig. 1 in Aufsicht mit den Hubzinken 7, die über die U-förmige Abwinkelung 10 und den Führungsrand 11 an dem Längsträger 3 eingehängt sind. An dem vorderen und hinteren Ende des Längsträgers 3 bilden der vordere Querträger 4 und der hintere Querträger 5 insgesamt eine H-Form des Tragrahmens 2 aus.

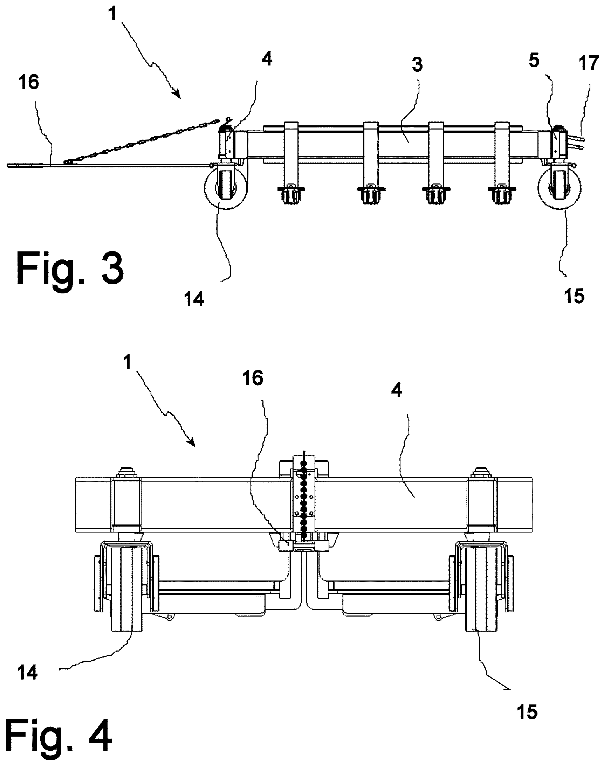

Die Fig. 3 zeigt den Trailerzuganhänger 1 der Fig. 1 in Seitenansicht mit dem Längsträger 3 und dem Hubzinken 7. Die an dem vorderen Querträger 4 angeordneten Vorderradrollen 14 werden durch eine Lenkbewegung der Anhängerdeichsel 16 bei Kurvenfahrt mit einem entsprechenden Lenkwinkel eingeschlagen. An dem hinteren Querträger 5 sind die Hinterradrollen 15 angeordnet. Dabei ist es möglich, als Ausführungsvariante diese Hinterradrollen 15 ebenfalls lenkbar vorzusehen und den Lenkeinschlag abhängig von dem Lenkeinschlag der Vorderradrollen 14 gleichsinnig vorzunehmen. Dies kann beispielsweise durch eine mechanische Kopplung geschehen, etwa durch eine im Inneren des Längsträgers 3 angeordnete Verbindungs- und Koppelstange. Weiterhin kann auch die Anhängerkupplung 17 drehbar ausgeführt sein und sich auf den Lenkeinschlag der Hinterradrollen 15 ausrichten.

Die Fig. 4 zeigt den Trailerzuganhänger 1 der Fig. 1 in Frontansicht mit dem vorderen Querträger 4 des Tragrahmens 2 und den Vorderradrollen 14 sowie der Anhängerdeichsel 16.

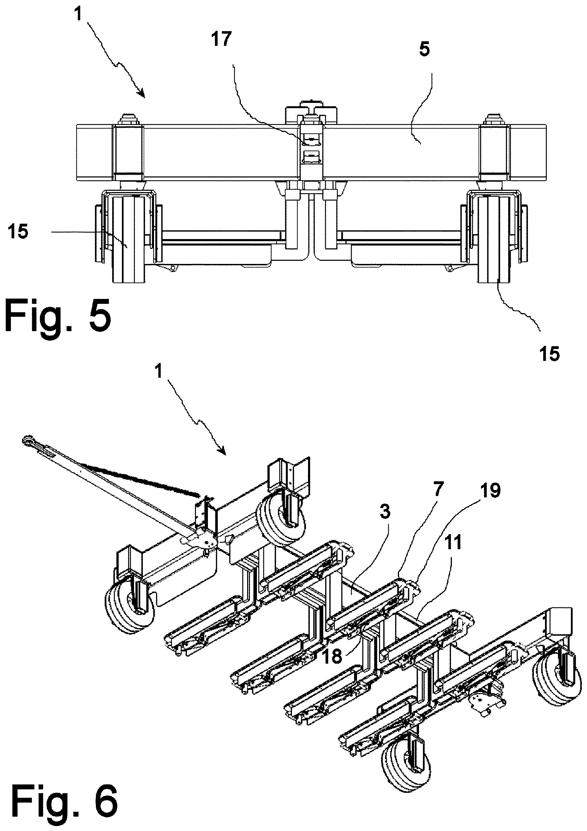

Die Fig. 5 zeigt den Trailerzuganhänger der Fig. 1 in Rückansicht mit dem hinteren Querträger 5 des Tragrahmens 2 und den Hinterradrollen 15 sowie der Anhängerkupplung 17.

Die Fig. 6 zeigt den Trailerzuganhänger 1 der Fig. 1 perspektivisch, schräg von unten. Die an dem Längsträger 3 über den Führungsrand 11 befestigten Hubzinken 7 weisen an der Unterseite ein Gestänge 18 auf, mit dem der Auswerferschieber 12 und der Haltebolzen 8 in der Fig. 1 miteinander verbunden sind. Über einen Fußhebel 19 kann dabei der Auswerferschieber 12 betätigt werden.

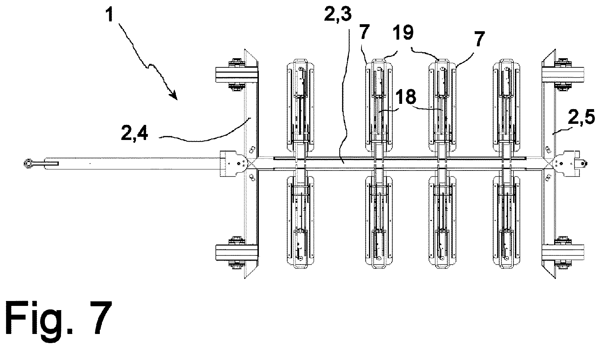

Die Fig. 7 zeigt den Trailerzuganhänger 1 der Fig. 1 von unten mit dem durch den Längsträger 3 sowie den vorderen Querträger 4 und den hinteren Querträger 5 gebildeten H-förmigen Tragrahmen 3 und die beidseits angeordneten Hubzinken 7 mit dem Gestänge 18.

Über eine gemeinsame Pneumatik- oder Hydraulikansteuerung können alle hier nicht dargestellten Hubvorrichtungen zwischen den Vorderradrollen 14 und den Hinterradrollen 15 sowie dem Tragrahmen 3 gleichzeitig angesteuert werden, um den gesamten Tragrahmen 3 mit den Hubzinken 7 anzuheben bzw. abzusenken. Ein oder mehrere, auf die Hubzinken 7 geschobene Transportgutwagen, auch bezeichnet als Trolleys, können auf diese Weise für den Fahrbetrieb angehoben werden, so dass ihre eigenen Laufrollen nicht auf der Fahrbahn abrollen.

Bei dem dargestellten Ausführungsbeispiel sind die Hubzinken 7 mit den Auswerferschiebern 12 bestückt, die über das Gestänge 18 mechanisch mit dem Haltebolzen 8, wie dargestellt in der Fig. 1, am Ende des Hubzinkens 7 gekoppelt sind. Beim Aufschieben eines Transportgutwagens auf die Hubzinke 7 drückt dieser den Auswerferschieber 12 in Richtung zu dem Längsträger 3, wobei gleichzeitig über das Gestänge 18 die Haltebolzen 8 in ihre obere Sperrstellung ausgerückt werden und den Transportgutwagen sichern.

Zum Entladen des Transportgutwagens wird über Fußhebel 19 der jeweiligen Haltebolzen 8 in seine Freigabestellung nach unten gezogen, wobei gleichzeitig über das Gestänge 18 der Auswerferschieber 12 in Richtung auf das freie Ende des jeweiligen Hubzinkens 7 gezogen wird und dabei das Ausschieben des Transportgutwagens einleitet.

## Patentansprüche

1. Trailerzuganhänger für einen Routenzug mit einem Tragrahmen (2), der an einem vorderen Fahrwerk (13) und einem hinterem Fahrwerk (13) über eine Hubvorrichtung gegenüber einer Fahrbahnoberfläche anhebbar abgestützt ist, aus einem Längsträger (3) sowie zwei rechtwinklig zu dem Längsträger angeordneten Querträgern (4,5) besteht und mindestens eine Ladeöffnung (6) aufweist, in der parallel zu den Querträgern (4,5) verlaufende Hubzinken (7) zur Aufnahme von in die Ladeöffnung (6) quer zur Fahrtrichtung ein- und ausschiebbare Transportgutwagen angeordnet sind,
**dadurch gekennzeichnet,**
**dass** der Längsträger des Tragrahmens (2) zentral angeordnet ist und der Tragrahmen (2) in Draufsicht H-förmig ausgebildet ist, wobei die Ladeöffnungen (6) sich beidseits des Längsträgers (3) befinden.

2. Trailerzuganhänger nach Anspruch 1,
**dadurch gekennzeichnet,**
**dass** die Hubzinken (7) in Fahrtrichtung in ihrer Position einzeln verstellbar an dem Längsträger (3) angebracht sind

3. Trailerzuganhänger nach Anspruch 2,
**dadurch gekennzeichnet,**
**dass** die Hubzinken (7) an dem zu dem in die Ladeöffnung (6) ragenden, freien Ende gegenüberliegenden Ende einen vertikalen Arm (9) aufweisen, dessen oberes Ende U-förmig abgewinkelt (10) ist und einen oberen Führungsrand (11) des Längsträgers (3) manuell verschiebbar umgreift.

4. Trailerzuganhänger nach einem der Ansprüche 1 bis 3,
**dadurch gekennzeichnet,**
**dass** einer oder mehrere der Hubzinken (7) an ihrem am Längsträger (3) eingehängten Ende einen Auswerferschieber (12) haben, der über ein Gestänge (18) mit einem vertikal verschiebbaren Haltebolzen (8) am freien Ende des Hubzinkens (7) gekoppelt ist.

5. Trailerzuganhänger nach einem der Ansprüche 1 bis 4,
**dadurch gekennzeichnet,**
**dass** das vordere Fahrwerk (13) aus zwei Vorderradrollen (14) besteht, die jeweils außen an einem vorderen Querträger (4) angeordnet sind.

6. Trailerzuganhänger nach Anspruch 5,
**dadurch gekennzeichnet,**
**dass** die Vorderradrollen (14) lenkbar sind und ihre Lenkbewegungen mechanisch gekoppelt sind, insbesondere durch Spurstangen.

7. Trailerzuganhänger nach Anspruch 6,
**dadurch gekennzeichnet,**
**dass** die Lenkbewegungen der Vorderradrollen (14) einer seitlichen Auslenkung einer Anhängerdeichsel (16) gekoppelt sind.

8. Trailerzuganhänger nach einem der Ansprüche 1 bis 7,
**dadurch gekennzeichnet,**
**dass** das hintere Fahrwerk (13) aus zwei Hinterradrollen (15) besteht, die jeweils außen an einem hinteren Querträger (5) angeordnet sind.

9. Trailerzuganhänger nach Anspruch 8,
**dadurch gekennzeichnet,**
**dass** die Hinterradrollen (15) lenkbar sind und ihre Lenkbewegungen mechanisch gekoppelt sind, insbesondere durch Spurstangen.

10. Trailerzuganhänger nach Anspruch 9,
**dadurch gekennzeichnet,**
**dass** die Lenkbewegungen der Hinterradrollen (15) mit einer seitlichen Auslenkung einer um eine vertikale Achse drehbaren Anhängerkupplung (17) gekoppelt sind.

11. Trailerzuganhänger nach einem der Ansprüche 6 oder 7 und einem der Ansprüche 9 oder 10,
**dadurch gekennzeichnet,**
**dass** im Bereich des Längsträgers (3) ein Übertragungsorgan angeordnet ist, das die Lenkbewegungen der Vorderradrollen (14) und der Hinterradrollen (15) koppelt, insbesondere eine Koppelstange.
